# EUROPEAN PATENT APPLICATION

(11) **EP 1 079 311 A2**
(43) Date of publication of application: **28.02.2001**
(21) Application number: 00306609.9
(22) Date of filing: 03.08.2000
(51) Int. Cl.: G06F 17/21

(54) **Method and system for creating web-quality online documentation from the same source file as printed documentation**

(30) Priority: 25.08.1999 US 382857
(71) Applicant: Hewlett-Packard Company, Palo Alto, California 94304-1112 (US)
(72) Inventor: Mathews, Meredith D., Loveland, CO 80537 (US); Loughlin, Paul M., Fort Collins, CO 80526 (US)
(74) Representative: Colgan, Stephen James

(57) **Abstract**

A method and system for creating documentation in a first format from a source file in a second format, where the source file has documentation text tagged with element tags, and where the second format source file conforms to second format element definition document definitions in a second format element definition document, the method and system include: creating a first format element definition document having first format element definition document definitions by deriving the first format element definition document from the second format element definition document and adding first format formatting definitions (100); creating a first format template having first format template definitions by importing the first format element definition document definitions and adding first format styles (102); and creating a first format source file having documentation text tagged with element tags by importing the first format template into the second format source file (104).

## Description

### Field of the Invention

This invention pertains to the field of online processing, and more specifically to a method and system for creating online documentation from an existing source file used for print documentation.

### Background of the Invention

This invention originates from a need for an efficient way to produce web-quality online documentation given an existing print source file comprising print documentation. In recent years, there has been an increasing desire for product end users to have access to product documentation in different formats. In addition to hard copy documentation, users also desire online documentation. One of the challenges in creating online documentation lies in creating online documentation that has features which users usually associate with web viewing, such as ease of viewing, navigation buttons, links, and online formatting. This task can be cumbersome when different end users have different style requirements for their documentation. Without the use of a simple conversion process, creating online documentation can often be time-consuming and costly, particularly where different versions of the online documentation are required.

One solution has been to create online documentation by creating a Portable Document Format file (a specification for electronic documents developed by Adobe Systems, Inc.) from an existing print source file comprising documentation data. Any fully formatted document (i.e. source file) created on a Windows, Macintosh, MS-DOS or UNIX platform can be converted into a Portable Document Format (PDF) file using Adobe Acrobat®. Acrobat® enables PDF files to be viewed on different platforms using the Adobe Acrobat® family of servers and readers. Acrobat® also enables users to send documents that contain distinctive typefaces, color, graphics, and photographs electronically to recipients, regardless of the application used to create the originals. The advantage of using Acrobat® is that almost any type of document can be converted to a PDF file, and its reader software (Acrobat® Reader) is freeware so that documents can be distributed to a greater number of users.

The problem with this solution is that online documentation created from a source file appears exactly on the monitor as pages that are printed from the source file. In other words, the fonts that are used for the hard copy documentation are the same fonts that appear in the online documentation, which are too small for online viewing. This often results in users having to print out the online documentation just to be able to read it, which defeats the purpose of having online documentation in the first place.

Another solution for creating online documentation has been to export existing print source files into Hypertext Markup Language (HTML), a markup language used for documents on the World Wide Web. This solution allows a print source file to be converted into an online format suitable for online viewing (i.e., readable fonts, navigation buttons, etc.). Because this solution largely involves mapping paragraph and character tags to predefined HTML tags, it is not an efficient solution because it is very time-consuming.

A need exists, therefore, for a method and system for creating online documentation from an existing print source file that can be easily converted into an online viewable format, and that results in documentation having a web-quality look and feel.

### Summary of the Invention

This invention is, in general, directed to method and system for creating web-quality online documentation from the same source files used for print documentation.

Thus, the invention may comprise a method for creating documentation in a first format from a source file in a second format, wherein the source file in the second format comprises documentation text tagged with element tags, and element definitions, the source file conforming to second format EDD definitions corresponding to a second format EDD, the method comprising: creating a first format EDD comprising first format EDD definitions by deriving the first format EDD definitions from the second format EDD definitions, and modifying the first format EDD definitions to comprise first format formatting definitions; creating a first format template comprising first format template definitions, the first format template definitions comprising first format EDD definitions and first format styles, wherein the first format EDD definitions are imported from the first format EDD and the first format styles are created in the first format template to give documentation text a first format look; and creating a first format source file comprising the documentation text tagged with element tags, comprising importing the first format template into the second format source file, the first format template definitions of the first format template overriding the element definitions of the second format source file, and the documentation text conforming to the first format template definitions of the first format template.

The invention may also comprise a method for creating online documentation from a print source file comprising documentation text tagged with element tags, and element definitions, the print source file conforming to print EDD definitions corresponding to a print EDD, the method comprising: creating an online EDD comprising online EDD definitions by deriving the online EDD definitions from the print EDD definitions, and modifying the online EDD definitions to comprise online formatting definitions; creating an online template comprising online template definitions, the online template definitions comprising online EDD definitions and online styles, wherein the online EDD definitions are imported from the online EDD, and the online styles are created in the online template to give the documentation text an online look; and creating an online source file comprising the documentation text tagged with the element tags, comprising importing the online template into the print source file, the online template definitions of the online template overriding the element definitions of the print source file, and the documentation text conforming to the online template definitions of the online template.

The invention may also comprise a system for creating documentation in a first format from a source file in a second format, comprising a second format EDD comprising second format EDD definitions, the second format EDD definitions comprising second format formatting definitions; a second format source file comprising documentation text tagged with element tags, and element definitions, the documentation text conforming to second format EDD definitions corresponding to the second format EDD; a first format EDD comprising first format EDD definitions, wherein the first format EDD definitions are derived from the second format EDD definitions, and the first format EDD definitions comprise first format formatting definitions; a first format template comprising first format template definitions, the first format template definitions comprising first format EDD definitions and first format styles, wherein the first format EDD definitions are imported from the first format EDD, and the first format styles are created in the first format template to give the documentation text a first format look; and a first format source file comprising the documentation text tagged with the element tags, wherein the first format source file is created by importing the first format template into the second format source file, the first format template definitions of the first format template overriding the element definitions of the second format source file, and the documentation text conforming to the first format template definitions of the first format template.

The invention may also comprise system for creating online documentation from a print source file, comprising a print EDD comprising print EDD definitions, the print EDD definitions comprising print formatting definitions; a print source file comprising documentation text tagged to element tags, and element definitions, the documentation text conforming to print EDD definitions corresponding to the print EDD; an online EDD comprising online EDD definitions, wherein the online EDD definitions are derived from the print EDD definitions, and the online EDD definitions comprise online formatting definitions; an online template comprising online template definitions, the online template definitions comprising online EDD definitions and online styles, wherein the online EDD definitions are imported from the online EDD, and the online styles are created in the online template to give the documentation text an online look; and an online source file comprising the documentation text tagged to the element tags, wherein the online source file is created by importing the online template into the print source file, the online template definitions of the online template overriding the element definitions of the print source file, and the documentation text conforming to the online template definitions of the online template.

The invention may also comprise a system for creating online documentation from a print source file, comprising a print EDD embedded on a computer readable medium, wherein the print EDD comprises print EDD definitions, and the print EDD definitions comprise print formatting definitions; a print source file embedded on a computer readable medium, wherein the print source file comprises documentation text tagged with element tags, and element definitions, and the documentation text conforms to print EDD definitions corresponding to the print EDD; an online EDD embedded on a computer readable medium, wherein the online EDD comprises online EDD definitions, the online EDD definitions are derived from the print EDD definitions, and the online EDD definitions comprise online formatting definitions; an online template embedded on a computer readable medium, wherein the online template comprises online template definitions, and the online template definitions comprise online EDD definitions and online styles, wherein the online EDD definitions are imported from the online EDD; and the online styles are created in the online template to give the documentation text an online look; and an online source file embedded on a computer readable medium, wherein the online source file comprises the documentation text corresponding to element tags, and the online source file is created by importing the online template into the print source file such that the online template definitions of the online template override the element definitions of the print source file, and the documentation text conforms to the online template definitions of the online template.

The invention may also comprise a system for creating documentation in a first format from a source file in a second format, comprising means for creating a first format EDD comprising first format EDD definitions; means for creating a first format template comprising first format template definitions, wherein the first format template definitions comprise the first format EDD definitions; and means for creating a first format source file, wherein the first format source file comprises the first format template definitions.

### Brief Description of the Drawings

An illustrative and presently preferred embodiment of the invention is illustrated in the drawings in which:
FIG. 1 illustrates a method for creating documentation in a first format from a source file in a second format.
FIG. 2 illustrates a system for creating documentation in a first format from a source file in a second format.
FIG. 3 illustrates components for creating a document in a prior art system.
FIG. 4 illustrates a preferred embodiment system for creating online documentation from a source file used for print documentation.

### Description of Preferred Embodiments

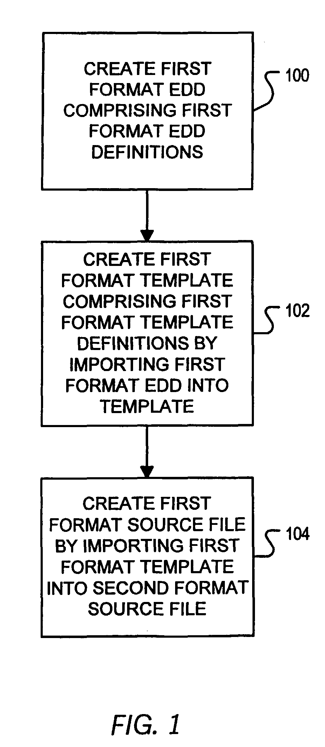

FIG. 1, in general, illustrates a method for creating documentation in a first format from a source file in a second format comprising creating first format element definition document (first format EDD) comprising first format EDD definitions 100; creating first format template comprising first format template definitions by importing first format EDD into template 102; and creating first format source file by importing first format template into second format source file 104.

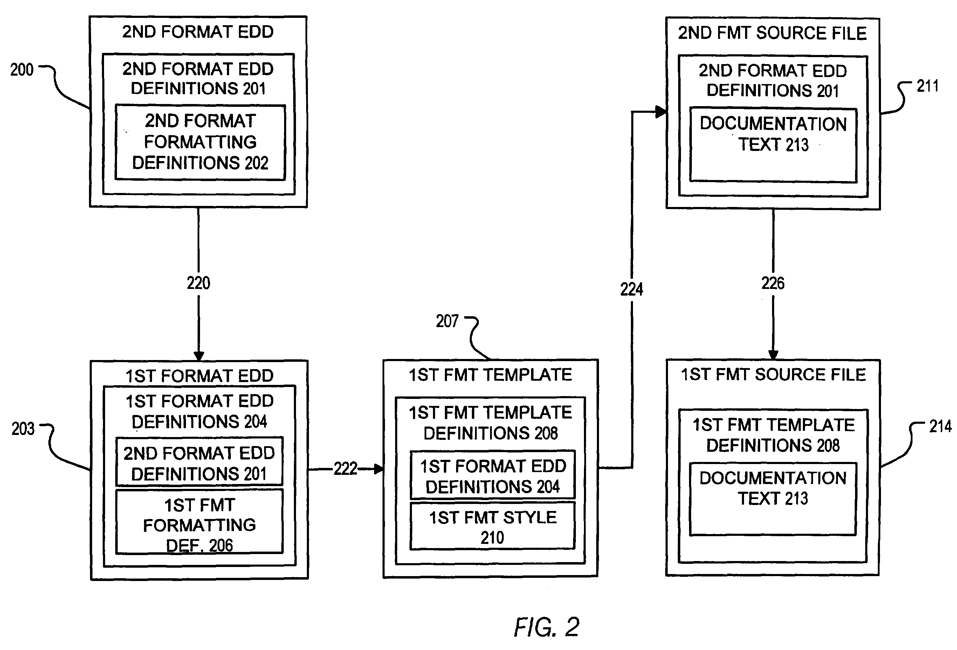

FIG. 2, in general, illustrates a system for creating documentation in a first format from a source file in a second format comprising second format element definition document (second format EDD) 200 comprising second format EDD definitions 201 with second format formatting definitions 202; second format source file 211 comprising documentation text tagged with element tags 213, where the documentation text conforms to second format EDD definitions 201; first format element definition document (first format EDD) 203 comprising first format EDD definitions 204 derived from 220 second format EDD definitions 201 of second format EDD 200, and first formatting definitions 206; first format template 207 comprising first format template definitions 208, comprising first format EDD definitions 204 imported from 222 first format EDD 203, and first format styles 210; and first format source file 214 comprising documentation text 213 conforming to first format template definitions 208, where the first format source file 214 is created 226 from importing 224 first format template 207 into second format source file 211.

### Introduction

In a preferred embodiment, this invention is implemented using Adobe® FrameMaker+SGML™ (hereinafter FrameMaker+SGML™) which allows Standard Generalized Markup Language (SGML) documents to be created, edited, and published. SGML is an information management standard adopted by the International Organization for Standardization (ISO) as a means of providing platform- and application-independent documents that retain formatting, indexing, and linked information, thereby allowing an organization to share volumes of complex, frequently revised documents across applications and computing platforms. SGML provides a grammarlike mechanism for users to define the structure of their documents and the tags they will use to denote the structure in individual documents.

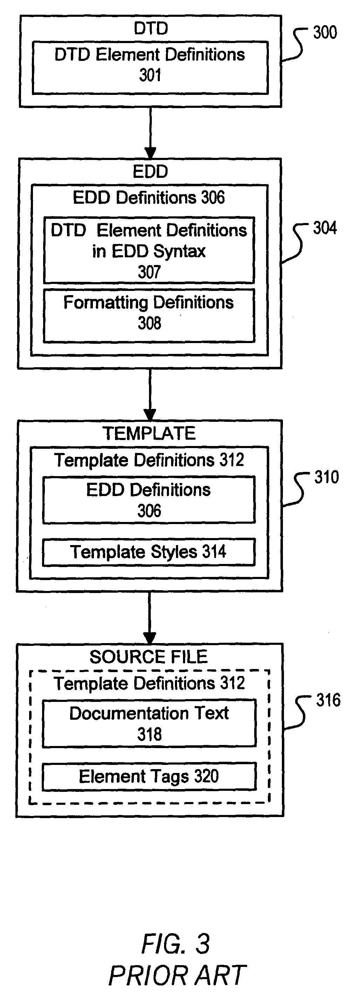

In order for a document to be fully portable as SGML, it should have an SGML Application associated with it. An SGML Application is a collection of files and information that fully describes how an SGML file is to be processed. In a preferred embodiment, as shown in FIG. 3, an SGML Application comprises DTD 300, element definition document (EDD) 304; and template 310. An SGML developer groups these files into an application and gives it a name. Once an SGML Application has been defined, a user document, or a source file 316 comprising documentation text 318 and element tags 320, can be created.

### Document Type Definition (DTD)

DTD 300 is Document Type Definition document that allows users to define the structure of their documents in SGML. Typically, one DTD is created for each document type. For instance, a document type can be a Memo, Letter, Chapter, or Table of Contents. In a preferred embodiment of the invention, DocBook DTD version 3.0 is used to create documentation.

DTD 300 comprises DTD element definitions 301. An element definition 301 can comprise:
- Content rules that determine what the element can contain (text, nontext objects, or other elements)
- Format rules that specify how the contents will be formatted
- Attribute definitions that specify attributes for the element

In EXAMPLE 1, for instance, Note is an element in which elements GlossList, Itemized List, Ordered List, etc. can all be included (i.e., an ItemizedList element can follow a Note element), and in which Caution, Important, Note, Tip, and Warning cannot be included. Additionally, Note has attributes, such as Lang, such specifies that the element will be displayed in English.

### EXAMPLE 1: DTD

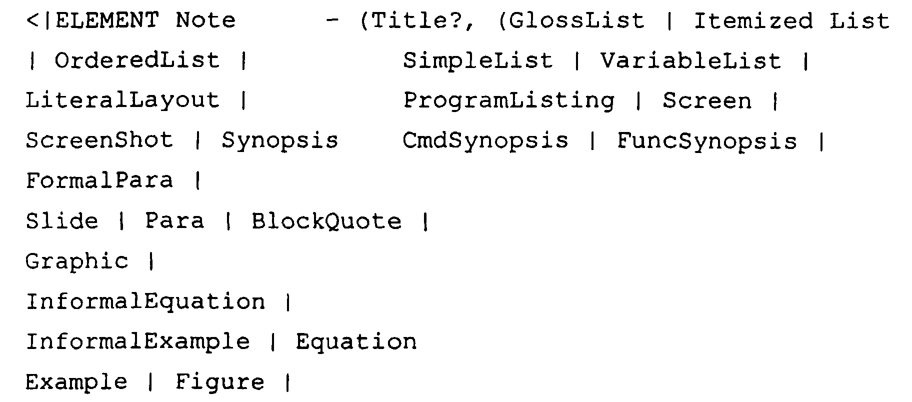

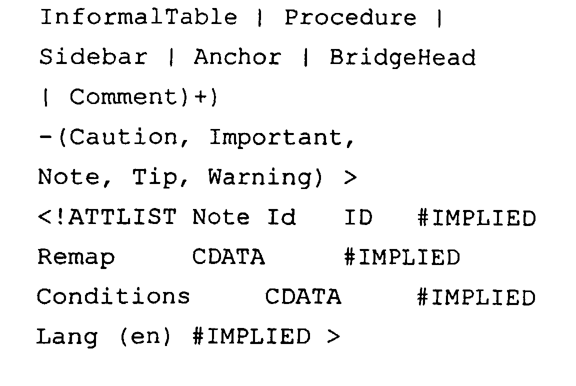

Since DTD 300 document is platform- and application-independent, it is a useful way to transmit documents to a variety of customers when the platform or application that the customers will use is an unknown factor: because DTD 300 document comprises standardized rules, it can be parsed (i.e., interpreted) by any machine. When DTD 300 document is received by a customer, the customer can use an appropriate application to display the DTD document. For example, FrameMaker+SGML™ customers can use FrameMaker+SGML™ tools to convert an SGML document into a FrameMaker+SGML™ document (element definition document, or EDD 302, to be discussed) and perform additional formatting, if desired.

### Element Definition Document (EDD)

EDD 304 is an application-specific version of DTD 300 that comprises element definitions for displaying text. Definitions for all elements valid in a particular EDD are defined in EDD definitions 306, which comprise DTD element definitions written in EDD syntax 307, and formatting definitions 308 also written in EDD syntax. EDD syntax is dictated by its underlying application, which a preferred embodiment, is FrameMaker+SGML™. EXAMPLE 2 illustrates some of the differences between EDD 304 and corresponding DTD 300:

### EXAMPLE 2: EDD

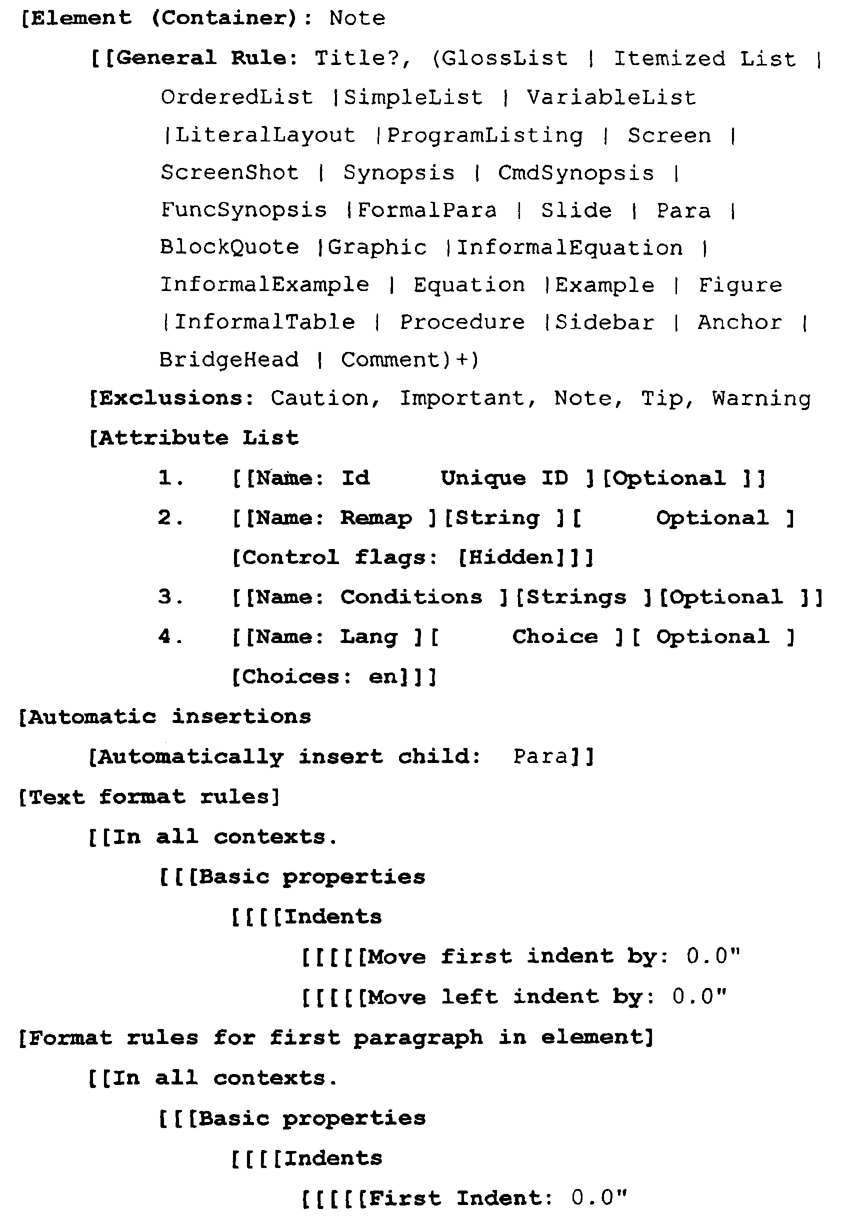

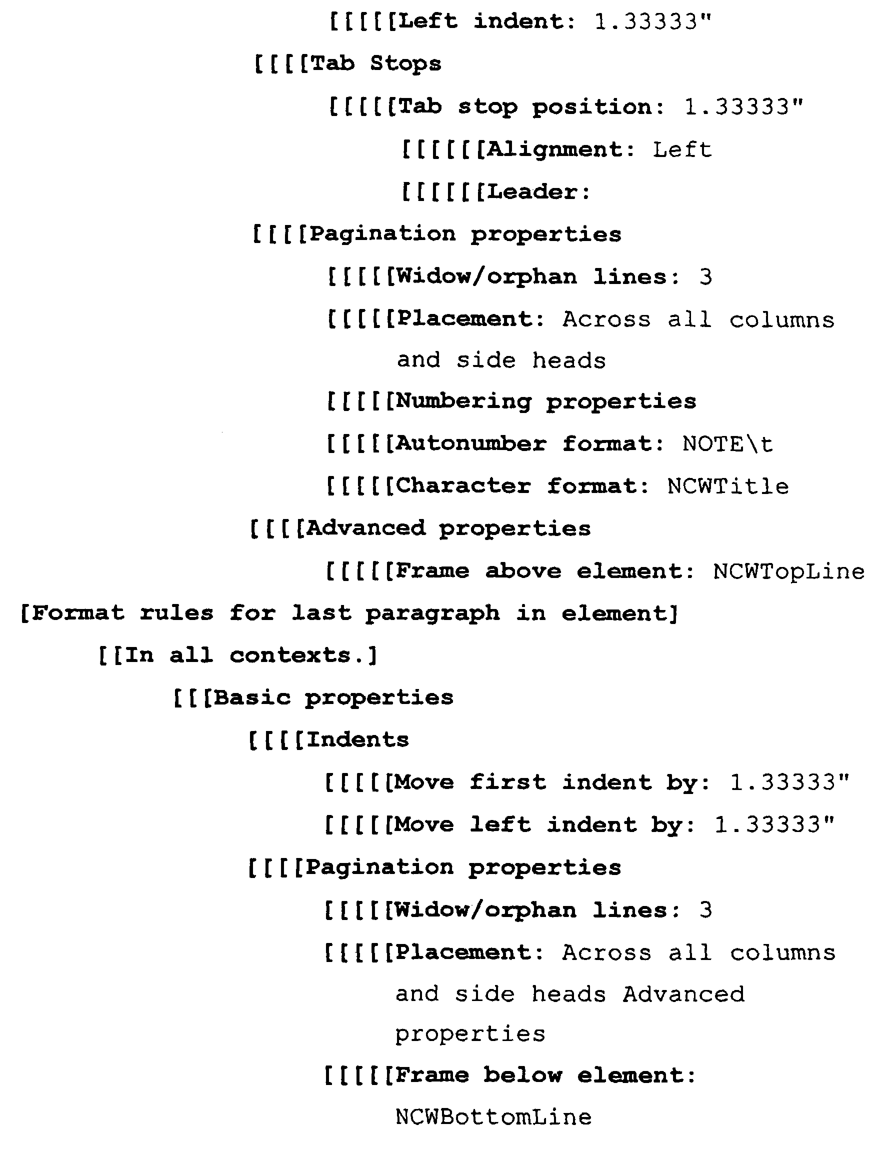

Notice that the General Rule, Exclusions, and Attribute List are DTD element definitions 301 written in EDD syntax 307. The remaining text (i.e. text following [Automatic insertions]) describes formatting definitions 308 for formatting the Note element in different contexts (additional element definitions), where a context can be an entire document, a first numbered item, or a before a particular element, for example. For example, the Note element in EXAMPLE 2 comprises three different formatting definitions in the form of rules: a text formatting rule, which applies in all contexts; a first paragraph formatting rule, which applies in all contexts, and a last paragraph formatting rule, which applies in all contexts.

### Template

Template 310 is a document that can be used as a foundation for creating or updating other documents. Templates 310 ensure that structure and style are consistent from one document to another. Template 310 comprises template definitions 312 that are needed in more than one document. Template definitions 312 comprise EDD definitions 306 and template styles 314. Template styles 314 can include paragraph, character, and table formats, page layouts, and graphics and formatting information. Templates 310 can also have variable definitions, cross-reference formats, conditional text settings, color definitions, and equation size and font settings. Templates 310 are structured so that a source file 316 associated with template 310 will have the appearance of template 310.

EDD definitions 306 in template definitions 312 are imported from corresponding EDD 304. Styles 314 are defined in template 310 itself. EDD definitions 304 and styles 314 are compiled in template's Element Catalog, which comprise valid elements and corresponding element definitions.

### Source File

Source file 316 is a document comprising documentation text 318 (i.e., text to be displayed, published, or otherwise used by someone like an end user) that conforms to template definitions 312. Documentation text 318 is tagged to element tags 320 that correspond to elements in EDD definitions 306, and that identify which element definition to reference in EDD definitions 306. Source file 316 is created by importing template 310 into a new document. Source file 316, like template 310, has an Element Catalog that comprises valid elements that can be used in source file 316, and corresponding element definitions.

When template 310 is imported into a new document, the new document inherits EDD definitions 306 and template styles 314 from template 310 which can be used to format text typed into the document. When template 310 is imported into an existing document (i.e., source file 316 comprising existing element definitions, which can include EDD definitions 306 and template styles 314, if any), previous element definitions are overridden by EDD definitions 306 and template styles 314 of template 310. In both cases, the document or source file 316 becomes a replica of template 310. If template 310 is subsequently modified, document or source file 316 can re-import template 310 to inherit new template definitions 312. When template 310 is used, documentation text 318 in source file 316 conforms to template 310 in source file 316 to obtain overall look of template 310.

### Creating Online Documentation from a Print Source File

In a preferred embodiment, *online* documentation is created from an existing *print* source file, It should be understood, however, that concepts discussed herein are equally applicable to creating *print* documentation from an existing *online* source file, as well as for creating documentation in any first format from an existing source file in any second format.

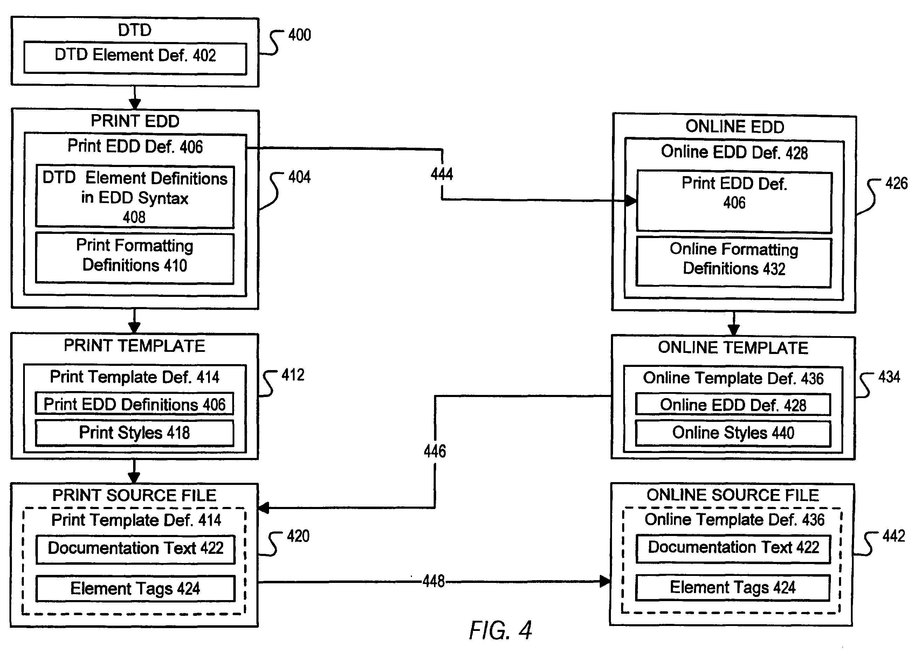

As shown in FIG. 4, *print source file* 420 is a document that comprises *documentation text* 422, or text to be used by an end user, tagged to element tags 424, wherein documentation text 422 conforms to *print template definitions* 414 of *print template* 412. Print template definitions 414 comprise print EDD definitions 406 and print styles 418, both of which can be associated with documentation text 422.

Since FrameMaker+SGML™ is used in a preferred embodiment, print source file 420 originates from DTD 400 comprising DTD element definitions 402 in a preferred embodiment. Print EDD 404 is created, comprising print EDD definitions 406. Print EDD definitions 406 comprise DTD element definitions written in EDD syntax 408 and print formatting definitions 410. Print template 412 can then be created. If print template 412 is used, print template 412 is imported into a new document to give resulting print source file 420 all of the element definitions and styles that are needed to create documentation text appropriate for a hard copy of the documentation, i.e., for a "print look". If print template 412 is not used, print EDD 404 is imported into a new document to give resulting print source file 420 all of the element definitions that are needed to create documentation text appropriate for a hard copy of the documentation, i.e., for a "print look".

All this information (i.e., element definitions and print styles, if any) is stored in print source file's 420 Element Catalog. While print EDD definitions 406 comprise definitions that can apply to a variety of documents, print styles 418 comprise definitions that are specific to a print template 412 to give documentation text 422 a "print look". Documentation text 422 can then be entered in print source file 420 and tagged with element tags 424 by entering text and associating the text with elements in the Element Catalog.

To create documentation text 422 in print source file 420, element tag 424 can be pre-selected from print source file's 420 Element Catalog, and text 422 can be typed into print source file 420. Documentation text 422 can also be created by typing in the desired text 422, and then wrapping text 422 in a selected element tag 424 by selecting text 422, and then selecting appropriate element tag 424. EXAMPLE 3 illustrates documentation text and corresponding element tags (Head, Para, List, List Item) that are selected from an Element Catalog.

### EXAMPLE 3:

| **TEXT** | **ELEMENT TAG** |
|---|---|
| **Tools and Materials Required** | Head |
| Make sure that you have the following tools ad materials before beginning any maintenance tasks on the light rail trains: | Para |
| • Flat-head screwdrivers | List item |
| • Approved lubricants | List List item |
| • Pressure gauge | List item |

Thus, when typing the text "Tools and Materials Required", a user could type in the text, select the text, and go to the Element Catalog to select the element tag Head. Text is automatically formatted and structured according to how element Head is defined in print template definitions 414.

When a user next types in the paragraph starting with "Make sure..." under element Head, print source file's 420 Element Catalog displays a list of all available elements according to print template definitions 414. That is, the Element Catalog displays those elements that can follow a Head element, as defined in print EDD definitions 406 of print template definitions 414. In EXAMPLE 3, Para could be a valid element under Head. An element definition for Head (which is defined in print EDD definitions 406) could be defined as follows:
**[Element (Container)**: Head
   **[[General Rule**: Title?, (Para | Comment)+)**]]**

The text following the Para element could be created if a user selected the List element from the Element Catalog. In EXAMPLE 3, the List element contains element ListItem so that when element List is selected, ListItem is automatically inserted. Again, this rule is defined in print EDD definitions 406, and could be defined as follows:
**[Element (Container)**: List
   . . .
**[Automatic insertions**
   **[Automatically insert child**: List item**]]**

Once all documentation text 422 is typed into print source file 420, a document which conforms to print template definitions 414 exists. When print source file 420 is printed out, printed documentation has appearance appropriate for a hard copy of the documentation.

With the increasing use of computers, and particularly network services, such as the Internet, users are becoming more accustomed to online formats. Therefore, rather than hard copy documentation, many users require online documentation. This invention utilizes existing files for print documentation to create online documentation comprising the same substance as the print documentation but in a format suitable for online viewing rather than a hard copy of the documentation. As shown in FIG. 2, online element definition document (online EDD) 426 is derived from 444 an existing print element definition document (print EDD) 404 (FIG. 1, 100). Online template 434 is created (FIG. 1, 102) by importing 212 from online EDD 426. Online template 434 is then imported 446 (FIG. 1, 104) to print source file 420 to create 448 online source file 442.

### Creating an Online Element Definition Document

As shown in FIG. 4, online EDD 426 is derived 444 from print EDD 404. This can be accomplished, for example, by copying print EDD 404 or directly modifying print EDD 404 and then renaming it. When online EDD 426 is derived from print EDD 404, online EDD 426 comprises print EDD definitions 406. Online formatting definitions 432 are then added to online EDD 426. Together, print EDD definitions 406 and online formatting definitions 432 comprise online EDD definitions 428. For example, EXAMPLE 4 illustrates how an element, Note, is defined in print EDD definitions 406, and how the same element is defined in online EDD definitions 428 using online formatting definitions:

### EXAMPLE 4:

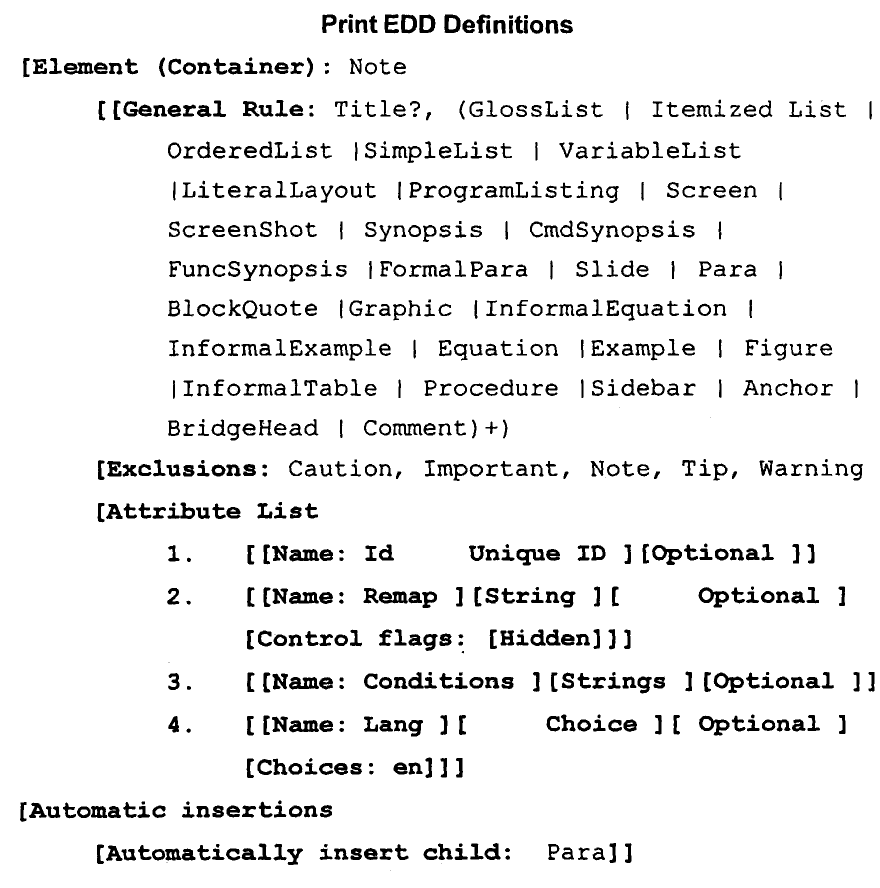

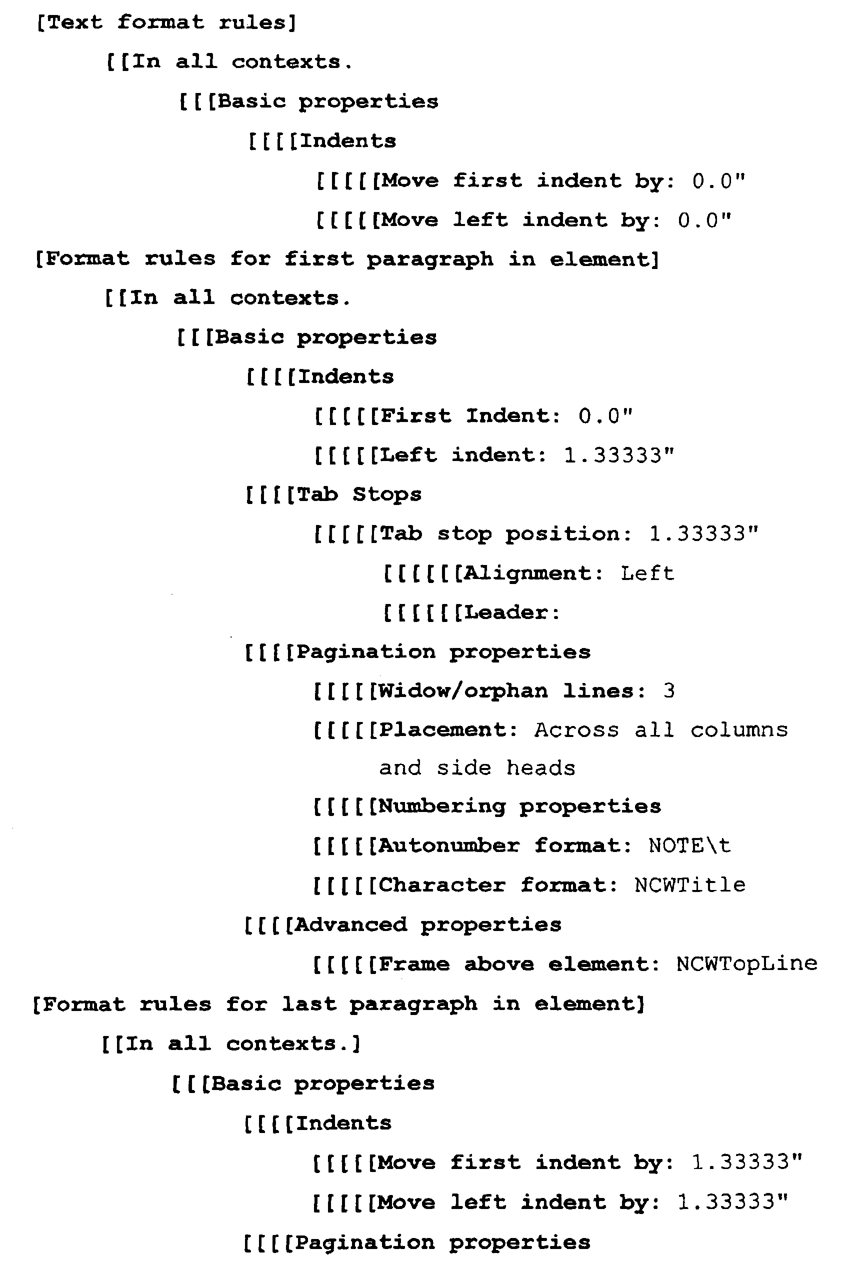

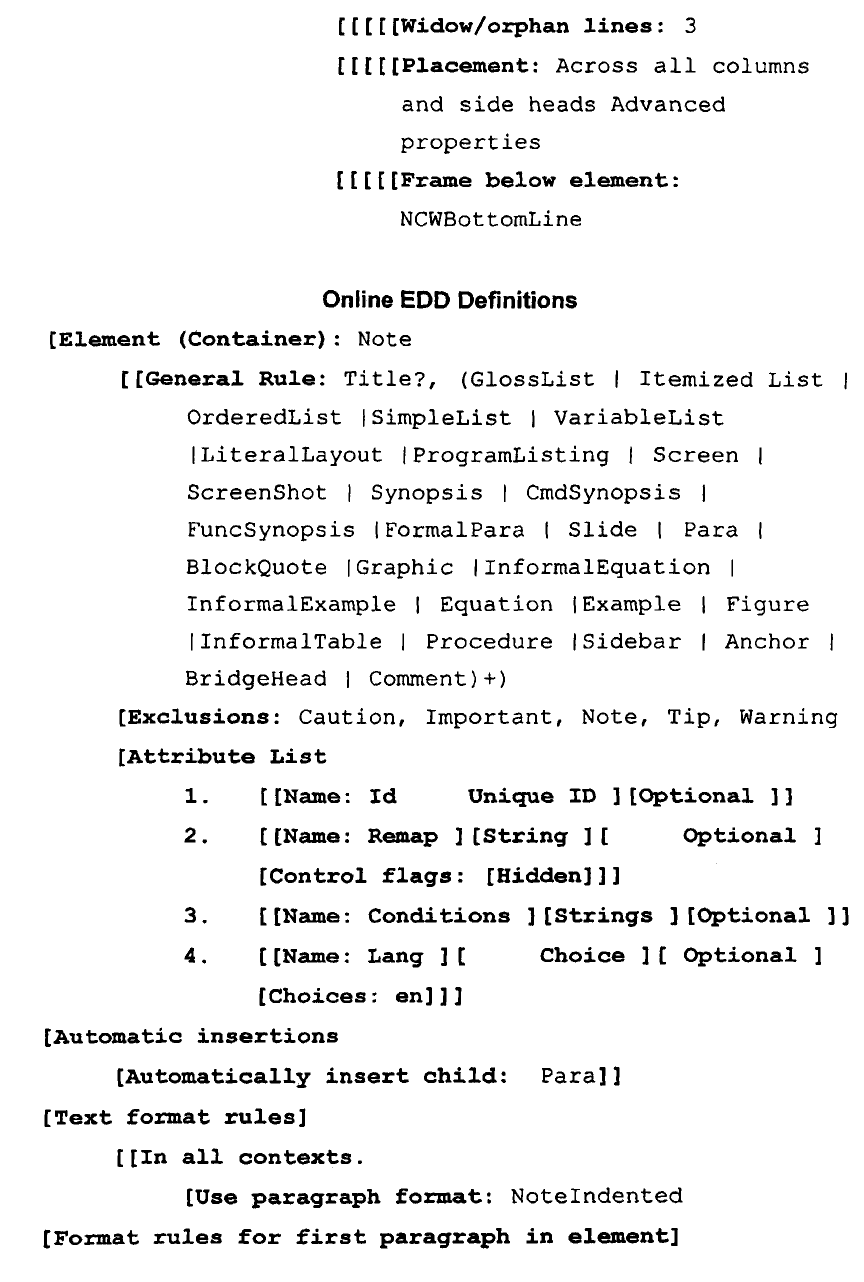

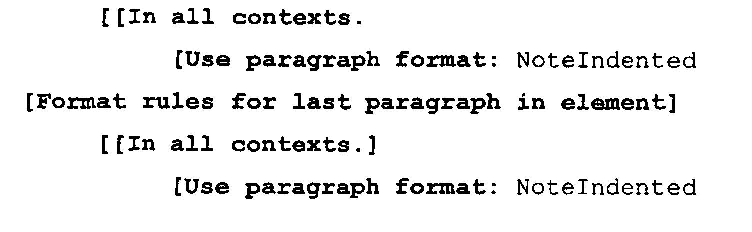

Whereas print EDD definitions 406 for element Note comprise specific formatting for the print documentation (i.e., paragraph indents and tab stops), online EDD definitions 428 in this example refer to a format I.D., where the format defines formatting settings such as those explicitly set out in print EDD definitions 406. The format is defined in online template definitions 436 of online template 434.

### Creating an Online Template

Online template 434 comprising online template definitions 436 is created by importing online EDD definitions 428 from online EDD 426 and adding online styles 440 to online template 434. While online EDD definitions 428 comprise definitions that can apply to a variety of documents, online styles 440 comprise definitions that are specific to an online template 412 to give documentation text 422 an "online look". Online styles 440 include:
- Paragraph formats, or a collection of properties that apply to an entire paragraph, including the default font, any tab settings, and spacing above and below the paragraph.
- Character formats, or a collection of font settings that apply to a range of text.
- Table formats to define the appearance of tables.
- Page layouts that determine the number of columns on a page and their positions. The page layouts also contain the text and graphics that appear in the background on body pages.
- Reference pages for holding common graphics and formatting information.
- Cross-reference formats that determine the text and appearance of cross-references.
- Variable definitions that let allow placeholders to be used for text that FrameMaker+SGML™ can update as the definitions change.
- Condition tags and conditional text settings that manage different versions of a single document in the same file.
- Colors specific to a document. There is a default, basic set of colors, but a template can include custom colors.
- Math definitions that include equation size, font settings, and custom math element definitions.

In a preferred embodiment, paragraph formats are the primary way of adding online style 440 to online template 434. For example, paragraph format NoteIndented, *supra* is defined in online template definitions 436 so that FrameMaker+SGML™ can refer to this format when the paragraph format NoteIndented is encountered in online EDD 426. Formats can be referenced by any number of elements. EXAMPLE 5 illustrates how paragraph format NoteIndented can be defined in online template 434 to add online style 440:

### EXAMPLE 5: Online Style

### NoteIndented

- Para Alignment: Center
- Left Indent: 36.0 pt
- Right Indent: 0.0 pt
- Frame Above Para: (None)
- Frame Below Para: (None)
- Para Start At: Anywhere
- Para Placement: Normal
- Space Above: 0.0 pt
- Space Below: 4.0 pt
- Keep With Previous: No
- Keep With Next: No
- Widow-Orphan Lines: 3
- Font Family: GillSans
- Font Variation: Regular
- Font Weight: Bold
- Font Angle: Italic
- Font Size: 9.0 pt
- Font Spread: 0.0%
- Font Color: Black
- Line Spacing: Fixed
- Tab Stops: 36.0 pt
- Tab Type: Left
- Tab Leader: (Space)
- Hyphenation: No
- Hyph Language: USEnglish

### Creating an Online Source File

Once online EDD 426 and online template 434 are created, online source file 442 can be created by importing 446 online template 434 into print source file 420. When a template is imported into a source file as opposed to a new document, *template definitions override any and all previous definitions in the source file*. The importance of importing online template 434 into print source file 420, as is done in this invention, is that online source file 442 does not have to be created from scratch. Creating online source file 442 from scratch entails recreating documentation text 422 (i.e., the text to be read by end users), and tagging individual pieces of documentation text 442 with element tags 424 from online template definitions 436 in online template 434 such that documentation text 422 conforms to an online appearance defined by online template 434.

Thus, when online template 434 is imported 446 into print source file 420, online template definitions 436 replace print template definitions 414 that were previously incorporated into print source file 420. Once online template 434 is imported into print source file 420, online source file 442 is created 448. Since print source file 420 can be recreated simply by importing print template 412 into online source file 442 that is created from importing online template 434 into print source file 420, online template 434 can be directly imported into print source file 420 without consequence. However, it is also possible to create a copy of print source file 420, and to import online template 434 into the copy of print source file 420. Therefore, while online source file 442, 442 is depicted as an object different from print source file 420, 420 (as would be the case if online template 434 is imported into a copy of print source file 420), the depiction should be understood as merely illustrating the transformation of print source file 420, 420 to online source file 442, 442.

When online template 434 is imported into print source file 420, documentation text 422 is formatted according to online template definitions 436. For example assume that documentation text "This is a title" is tagged with element Title and is the first paragraph of element Title; "This is a first para note" and "This is a last para note" are tagged with element Note, where "This is a first para note" is the first paragraph of element Note, and "This is a last para note" is a last paragraph of element Note. Also assume that Note is a valid child of Title. When original print source file 420 was created, documentation text 422 in print source file 420 conformed to print template definitions 414. For example, if print template definitions 414 comprised print EDD definitions 410 of EXAMPLE 5, *supra*, and if both Note and Title comprise the same first and last paragraph formatting, documentation text in print source file 420 would have the appearance shown in EXAMPLE 6:

### EXAMPLE 6: PRINT SOURCE FILE - Documentation Text

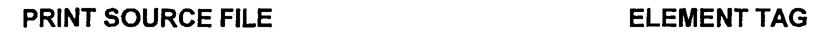

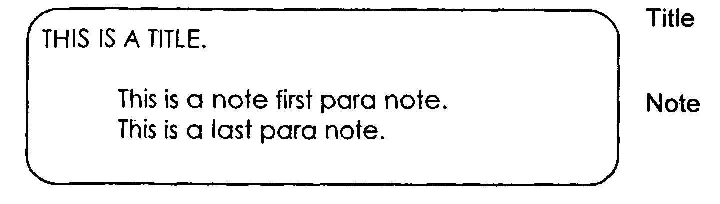

Notice that the first paragraph of element Title ("THIS IS A TITLE") is formatted in accordance with print EDD definition 410 for a first paragraph in that it is not indented, and that both the first and second paragraphs of element Note ("This is a first para note.", and "This is a last para note.") are formatted according to print EDD definition for a first and a last paragraph in that they *are* indented.

When online template 434 is imported into print source file, online template definitions 436 (which inherited online EDD definitions 428) override print template definitions 414. Assuming that online template definitions 436 comprise online EDD definitions 428 of EXAMPLE 5, and elements Note and Title have the same element definitions, then "This is a title", "This is a first note.", and "This is a last para note." all get formatted with format NoteIndented. Assuming that the following font is GillSans, the font specified for paragraph format NoteIndented in EXAMPLE 5 ("Font Family"), documentation text 422 in online source file 442 could have the appearance shown in EXAMPLE 7:

### EXAMPLE 7: ONLINE SOURCE FILE - Documentation Text

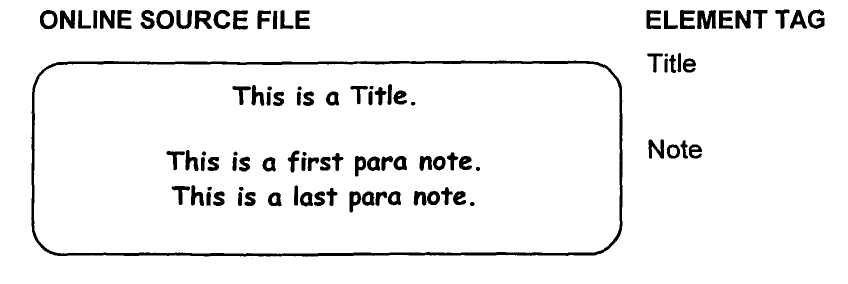

When FrameMaker+SGML™ encounters element tags 424 in online source file 442, Element Catalog corresponding to online source file 442 is referenced for online EDD definitions 428. Since element Title (corresponding to element tag Title in online source file 442) references paragraph format NoteIndented (see online EDD definitions 428 of EXAMPLE 5, *supra*), format NoteIndented is referenced in online source file 442 for instructions on how to format "This is a title." When element Note is found, FrameMaker+SGML™ also refers to paragraph format NoteIndented, and formats the first paragraph ("This is a first para note.") according to the definition set forth for a first paragraph of element Note, and formats the last paragraph ("This is a last para note.") according to the definition set forth for a last paragraph of element Note.

Resulting online source file 442 comprises documentation text 422 and element tags 424 matching documentation text 422 and element tags 424 of print source file 420. Online source file 442 differs from print source file 420 in the underlying definitions corresponding to element tags 424 and documentation text 422. Print source file 420 comprises documentation text 422 that conforms to print template definitions 414 of print template 412, wherein documentation text 422 of online source file 442 conforms to online template definitions 436 of online template 434. In short, online source file 442 comprises documentation text 422 that is substantively the same as documentation text 422 from print source file 420, but which aesthetically conforms to online template definitions 436 so that documentation text 442 of online source file 442 has the appearance of online documentation.

Since intended users of online source file 442 may not have access to FrameMaker+SGML™, online source file 442 can be converted into a portable document format, or one which a wide range of users can read. In a preferred embodiment, online source file 442 is converted into an Adobe® PDF file, using Adobe Distiller. A PDF file allows anyone with Adobe Acrobat Reader to view, navigate, and print documents that are in the Adobe Portable Document Format. Since Adobe Acrobat Reader is freeware, and can be obtained by any user, and because the format can be viewed on different platforms, converting online source file 442 to PDF makes online documentation available to a wider range of users.

### Conclusion

Defining styles in the online template allows the appearance of a document to change without having to make detailed and lengthy changes to an EDD. Since documentation text 422 and element tags 424 in both print source fife 420 and online source file 442 are the same, the time and expense otherwise needed to type documentation text 422 and manually format different parts of the documentation are eliminated. Because the only difference between print source file 420 and online source file 442 are the styles 418, 440, which are quick and easy to implement, and formatting definitions 410, 432 which are, for the most part, derived from existing definitions, the conversion from print documentation to online documentation (and from online documentation to print documentation) is simple and inexpensive. Furthermore, this invention allows a certain "look", or style, to be reused by a simple reference to the format name, eliminating the onerous task of having to redefine format settings for each element that wants to use a certain style.

Without the use of this method for creating online documentation, an online document would otherwise have to be created by making extensive formatting changes to a print EDD, as well as manually creating an online template and an online source file. For instance, to modify element Note such that it has the appearance of format Note Indented, for example, where format NoteIndented has an online look, an EDD developer would have to go into the print EDD (or a copy thereof), and individually define desired format settings for element Note. This could include modifying definitions for Tab Stops and Indents such that those settings match those of format NoteIndented. An online template would have to be created and imported into an online source file. Text would have to be manually entered into the online source file, and individual pieces of the text would have to be manually formatted by selecting desired element tags.

Furthermore, if another element, such as Title, had a use for the same look as that defined for element Note, the same format settings would have to be defined for element Title as element Note. Again, this would entail an EDD developer having to go into the print EDD (or a copy thereof), and individually define desired format settings for element Title, which could include modifying definitions for Tab Stops and Indents such that the settings match those of format NoteIndented.

A preferred embodiment of the invention described herein has been directed to a method and system for creating *online* documentation from the same source file used for *print* documentation, It should be understood, however, that it is also within the scope of this invention that the method and system apply to creating *print* documentation from the same source file used for *online* documentation, and that the invention, in general, encompasses the conversion of documentation in one format to documentation in a second format. Furthermore, although a preferred embodiment of the invention utilizes an SGML DTD as a starting point, it should be understood that an SGML DTD is used in a preferred embodiment of using FrameMaker+SGML™, and is not a necessary starting point for the invention.

While the invention has been described in a FrameMaker+SGML™ context, it should be understood that this invention is applicable to any document formatter having similar characteristics as FrameMaker+SGML™. Such characteristics include text that is tagged with definitions that are defined external to the document comprising documentation text, and documents comprising formatting definitions for text.

While illustrative and presently preferred embodiments of the invention have been described in detail herein, it is to be understood that the inventive concepts may be otherwise variously embodied and employed, and that the appended claims are intended to be construed to include such variations, except as limited by the prior art.

## Claims

1. A method for creating documentation in a first format from a source file in a second format, wherein said source file comprises documentation text tagged with element tags, and element definitions, said source file conforming to second format EDD definitions corresponding to a second format EDD, said method comprising:
a. creating a first format EDD comprising first format EDD definitions by deriving said first format EDD definitions from said second format EDD definitions, and modifying said first format EDD definitions to comprise first format formatting definitions (100);
b. creating a first format template comprising first format template definitions, said first format template definitions comprising first format EDD definitions and first format styles (102), wherein:
i. said first format EDD definitions are imported from said first format EDD; and
ii. said first format styles are created in said first format template to give said documentation text a first format look; and
c. creating a first format source file comprising said documentation text tagged with element tags, comprising importing said first format template into said second format source file, said first format template definitions of said first format template overriding said element definitions of said second format source file, and said documentation text conforming to said first format template definitions of said first format template (104).

2. A method as in claim 1, wherein said modifying said first format EDD definitions to comprise first format formatting definitions comprises referencing said first format styles in said first format template.

3. A method as in claim 1, wherein said adding first format styles comprises creating paragraph formats for formatting documentation text to have a first format look.

4. A method for creating online documentation from a print source file comprising documentation text tagged with element tags, and element definitions, said print source file conforming to print EDD definitions corresponding to a print EDD, said method comprising:
a. creating an online EDD comprising online EDD definitions by deriving said online EDD definitions from said print EDD definitions, and modifying said online EDD definitions to comprise online formatting definitions;
b. creating an online template comprising online template definitions, said online template definitions comprising online EDD definitions and online styles, wherein:
i. said online EDD definitions are imported from said online EDD; and
ii. said online styles are created in said online template to give said documentation text an online look; and
c. creating an online source file comprising said documentation text tagged with element tags, comprising importing said online template into said print source file, said online template definitions of said online template overriding said element definitions of said print source file, and said documentation text conforming to said online template definitions of said online template.

5. A method as in claim 4, wherein said modifying said online EDD definitions to comprise online formatting definitions comprises referencing said online styles in said online template.

6. A method as in claim 4, wherein said adding online styles comprises creating paragraph formats for formatting documentation text to have an online look.

7. A method as in claim 6, wherein said modifying said online EDD definitions to comprise online formatting definitions comprises referencing said paragraph formats in said online template.

8. A system for creating documentation in a first format from a source file in a second format, comprising:
a. a second format EDD (200) comprising second format EDD definitions (201), said second format EDD definitions comprising second format formatting definitions (202);
b. a second format source file (211) comprising documentation text tagged with element tags (213), and element definitions, said documentation text conforming to second format EDD definitions corresponding to said second format EDD;
c. a first format EDD (203) comprising first format EDD definitions (204), wherein said first format EDD definitions are derived from (220) said second format EDD definitions, and said first format EDD definitions comprise first format formatting definitions (206);
d. a first format template (207) comprising first format template definitions (208), said first format template definitions comprising first format EDD definitions and first format styles (210), wherein:
i. said first format EDD definitions are imported from (222) said first format EDD; and
ii. said first format styles are created in said first format template to give said documentation text a first format look; and
e. a first format source file (214) comprising said documentation text tagged with element tags, wherein said first format source file is created (226) by importing (224) said first format template into said second format source file, said first format template definitions of said first format template overriding said element definitions of said second format source file, and said documentation text conforming to said first format template definitions of said first format template.

9. A system for creating online documentation from a print source file, comprising:
a. a print EDD comprising print EDD definitions, said print EDD definitions comprising print formatting definitions;
b. a print source file comprising documentation text tagged with element tags, and element definitions, said documentation text conforming to print EDD definitions corresponding to said print EDD;
c. an online EDD comprising online EDD definitions, wherein said online EDD definitions are derived from said print EDD definitions, and said online EDD definitions comprise online formatting definitions;
d. an online template comprising online template definitions, said online template definitions comprising online EDD definitions and online styles, wherein:
i. said online EDD definitions are imported from said online EDD; and
ii. said online styles are created in said online template to give said documentation text an online look; and
e. an online source file comprising said documentation text corresponding to element tags, wherein said online source file is created by importing said online template into said print source file, said online template definitions of said online template overriding said element definitions of said print source file, and said documentation text conforming to said online template definitions of said online template.

10. A system as in claim 9, wherein online formatting definitions comprise references to said online styles in said online template.
